# EUROPEAN PATENT APPLICATION

(11) **EP 2 827 523 A1**
(43) Date of publication of application: **21.01.2015**
(21) Application number: 14183065.3
(22) Date of filing: 31.08.2012
(51) Int. Cl.: H04L 1/16, H04W 28/06

(54) **Improved fragmentation for long packets in a low-speed wireless network**

(30) Priority: 02.09.2011 US 201161530753 P; 09.07.2012 US 201261669608 P; 29.08.2012 US 201213597758
(62) Divisional of application: 12766217.9
(71) Applicant: Qualcomm Incorporated, San Diego, CA 92121-1714 (US)
(72) Inventor: Quan, Zhi, San Diego,, CA California 92121-1714 (US); Merlin, Simone, San Diego,, CA California 92121-1714 (US); Abraham, Santosh Paul, San Diego,, CA California 92121-1714 (US); Asterjahdi, Alfred, San Diego,, CA California 92121-1714 (US)
(74) Representative: Carstens, Dirk Wilhelm

(57) **Abstract**

A method includes creating a plurality of data fragments from a single data unit. The method also includes transmitting the plurality of data fragments to a receiver and receiving an acknowledgement from the receiver after transmitting a last data fragment of the plurality of data fragments. The method further includes selectively interpreting the acknowledgement as a multi-fragment acknowledgement (MFA) in response to a value of a fragment sequence number (FGSN) of the last data fragment. The MFA indicates receipt or non-receipt by the receiver of each of the plurality of data fragments of the single data unit.

## Description

### CROSS-REFERENCE TO RELATED APPLICATIONS

The present application claims priority from commonly owned U.S. Provisional Patent Application 61/530,753 filed September 2, 2011 and U.S. Provisional Patent Application 61/669,608 filed July 9, 2012, the contents of each of which are expressly incorporated herein by reference in their entirety.

### BACKGROUND

### Field

The present application relates generally to wireless communications, and more specifically to systems, methods, and devices for fragmentation of packets in low-speed wireless networks.

### Background

In many communication systems, communications networks are used to exchange messages among several interacting spatially-separated devices. Networks may be classified according to geographic scope, which could be, for example, a metropolitan area, a local area, or a personal area. Such networks would be designated respectively as a wide area network (WAN), metropolitan area network (MAN), local area network (LAN), or personal area network (PAN). Networks also differ according to the switching/routing technique used to interconnect the various network nodes and devices (e.g. circuit switching vs. packet switching), the type of physical media employed for transmission (e.g. wired vs. wireless), and the set of communication protocols used (e.g. Internet protocol suite, SONET (Synchronous Optical Networking), Ethernet, etc.).

Wireless networks are often used when the network elements are mobile with dynamic connectivity, or if the network architecture is formed in an ad hoc, rather than fixed, topology. Wireless networks may use electromagnetic waves in the radio, microwave, infra-red, optical, etc. frequency bands. Wireless networks may facilitate improved user mobility and rapid field deployment as compared to fixed wired networks.

The devices in a wireless network may transmit and/or receive information. The information may include packets, which may be referred to as data units (e.g., MAC Service Data Units (MSDUs)). The packets may include overhead information (e.g., header information, packet properties, etc.) that helps in routing the packet through the network, identifying the data in the packet, and processing the packet. The packets may also include a payload that includes data such as user data, multimedia content, etc.

Certain wireless networks have relatively low data transmission rates and may be described as "low-speed" networks. Devices participating in those networks may be constrained to only transmit small packets within a given transmission opportunity window (TXOP). However, typical data packets, such as those used for Ethernet, are larger than those that can be transmitted in a single TXOP on a low-speed network and therefore such packets are typically fragmented and sent piecemeal. Each of the data fragments may be sent in a packet or data frame (e.g., a MAC Protocol Data Unit (MPDU)). A block acknowledgement (ACK) may be sent to acknowledge up to 16 fragments of each of up to 64 data units using a fixed size bitmap (i.e., 64x16 bits or 128 bytes). There are setup and tear down phases associated with using block acknowledgements. During the setup phase, capability information such as buffer size and block acknowledgement policy are negotiated between the transmitter and the receiver. Once the setup phase is completed, the transmitter may send fragments without waiting for an acknowledgement (ACK) frame. Using the block ACK may be less efficient when acknowledging fragments of a few data units because of the large size of the block ACK's bitmap. The overhead associated with the setup and teardown phases of the block ACK may also reduce efficiency. Current fragmentation schemes in low-speed (and other) networks may require a receiver to transmit an acknowledgement (ACK) after each fragment is received. Because of the increased rate of packet fragmentation in low-speed networks, the number of ACKs transmitted in such networks is proportionally increased. The increase in the number of ACKs lowers the efficiency of the data traffic on the network because a larger portion of each TXOP is dedicated to overhead (e.g. ACK transmittal and various frame spaces).

### SUMMARY

One aspect of the disclosure provides a method including creating a plurality of data fragments from a single data unit. The method also includes transmitting the plurality of data fragments to a receiver and receiving an acknowledgement from the receiver after transmitting a last data fragment of the plurality of data fragments. The method further includes selectively interpreting the acknowledgement as a multi-fragment acknowledgement (MFA) in response to a value of a fragment sequence number (FGSN) of the last data fragment. The MFA indicates receipt or non-receipt by the receiver of each of the plurality of data fragments of the single data unit.

Another aspect is a method including receiving a data fragment of a block of data fragments of a single data unit. The method also includes transmitting an acknowledgement to a wireless device in response to determining that the data fragment is a last data fragment of the block of data fragments of the single data unit. The acknowledgement indicates whether each of the data fragments of the block of data fragments of the single data unit was received from the wireless device. The method further includes transmitting the acknowledgement to the wireless device in response to determining that the data fragment is a last data fragment of the single data unit. The method also includes refraining from transmitting the acknowledgement to the wireless device in response to determining that the data fragment is not the last data fragment of the block of data fragments and that the data fragment is not the last data fragment of the single data unit.

Another aspect is an apparatus including a processor configured to create a plurality of data fragments from a single data unit and partition the plurality of data fragments into a plurality of fragment blocks. At least one fragment block of the plurality of fragment blocks includes two or more data fragments. The processor is further configured to initiate transmission of a first fragment block of the plurality of fragment blocks to a device and receive an acknowledgement from the device after a last data fragment of the first fragment block is transmitted. The acknowledgement indicates receipt or non-receipt by the device of each of the data fragments of the first fragment block.

Another aspect is an apparatus including a processor configured to receive a data, fragment of a block of data fragments of a single data unit. The processor is further configured to initiate transmission of an acknowledgement to a wireless device in response to determining that the data fragment is a last data fragment of the block of data fragments of the single data unit. The acknowledgement indicates whether each of the data fragments of the block of data fragments of the single data unit was received from the wireless device. The processor is also configured to initiate transmission of the acknowledgement to the wireless device in response to determining that the data fragment is a last data fragment of the single data unit. The processor is further configured to refrain from initiating transmission of the acknowledgement to the wireless device in response to determining that the data fragment is not the last data fragment of the block of data fragments and that the data fragment is not the last data fragment of the single data unit.

Another aspect is a non-transitory computer-readable medium storing instructions that, when executed by a processor, cause the processor to create a plurality of data fragments from a single data unit and initiate transmission of the plurality of data fragments to a receiver. The instructions, when executed by the processor, further cause the processor to receive an acknowledgement from the receiver after a last data fragment of the plurality of data fragments is transmitted and selectively interpret the acknowledgement as a multi-fragment acknowledgement (MFA) in response to a value of a fragment sequence number (FGSN) of the last data fragment. The MFA indicates receipt or non-receipt by the receiver of each of the plurality of data fragments of the single data unit.

Another aspect is a non-transitory computer-readable medium storing instructions that, when executed by a processor, cause the processor to receive a data fragment of a block of data fragments of a single data unit and initiate transmission of an acknowledgement to a wireless device in response to determining that the data fragment is a last data fragment of the block of data fragments of the single data unit. The acknowledgement indicates whether each of the data fragments of the block of data fragments of the single data unit was received from the wireless device. The instructions, when executed by the processor, also cause the processor to initiate transmission of the acknowledgement to the wireless device in response to determining that the data fragment is a last data fragment of the single data unit. The instructions, when executed by the processor, further cause the processor to refrain from initiating transmission of the acknowledgement to the wireless device in response to determining that the data fragment is not the last data fragment of the block of data fragments and that the data fragment is not the last data fragment of the single data unit.

### BRIEF DESCRIPTION OF THE DRAWINGS

FIG. 1 illustrates an example of a wireless communication system in which aspects of the present disclosure may be employed.
FIG. 2 illustrates various components, including a receiver, which may be utilized in a wireless device that may be employed within the wireless communication system of FIG. 1.
FIG. 3 illustrates various components that may be utilized in the wireless device of FIG. 2 to transmit wireless communications.
FIG. 4 illustrates various components that may be utilized in the wireless device of FIG. 2 to receive wireless communications.
FIG. 5a illustrates a method for data fragmentation in a low-speed network.
FIG. 5b illustrates aspects of a fragmentation method using a multi-frame acknowledgment.
FIG. 6 illustrates aspects of a method for distinguishing successive blocks of fragments using MFAs.
FIG. 7a illustrates a fragment ACK, as may be used by the method in FIG. 5a.
FIG. 7b illustrates aspects of a multi-fragment acknowledgement (MFA), as may be used by the method in FIG. 5b.
FIG. 7c illustrates aspects of another multi-fragment acknowledgement (MFA), as may be used by the method in FIG. 5b.
FIG. 8 illustrates aspects of a method of transmitting a plurality of data fragments and receiving a multi-fragment acknowledgement (MFA).
FIG. 9 illustrates aspects of a method of receiving a plurality of data fragments and transmitting a multi-fragment acknowledgement (MFA).
FIG. 10 is a block diagram of an example wireless device in accordance with certain aspects of the present disclosure.

### DETAILED DESCRIPTION

Various aspects of the novel systems, apparatuses, and methods are described with reference to the accompanying drawings. The teachings in this disclosure may, however, be embodied in many different forms and should not be construed as limited to any specific structure or function presented throughout this disclosure. Based on the teachings herein one skilled in the art should appreciate that the scope of the disclosure is intended to cover any aspect of the novel systems, apparatuses, and methods disclosed herein, whether implemented independently of or combined with any other aspect of the disclosure. For example, an apparatus may be implemented or a method may be practiced using any number of the aspects set forth herein.

Although particular aspects are described herein, many variations and permutations of these aspects fall within the scope of the disclosure. Although some benefits and advantages are mentioned, the scope of the disclosure is not intended to be limited to particular benefits, uses, or objectives. Rather, aspects of the disclosure are intended to be broadly applicable to different wireless technologies, system configurations, networks, and transmission protocols, some of which are illustrated by way of example in the figures and in the following description. The detailed description and drawings are merely illustrative of the disclosure rather than limiting, the scope of the disclosure being defined by the appended claims and equivalents thereof.

Popular wireless network technologies may include various types of wireless local area networks (WLANs). A WLAN may be used to interconnect nearby devices together, employing widely used networking protocols. The various aspects described herein may apply to any communication standard, such as WiFi or, more generally, any member of the IEEE 802.11 family of wireless protocols. For example, the various aspects described herein may be used as part of the IEEE 802.11 ah protocol, which uses sub-1GHz frequency bands.

Wireless signals in a sub-gigahertz band may be transmitted according to the 802.11 ah protocol using orthogonal frequency-division multiplexing (OFDM), direct-sequence spread spectrum (DSSS) communications, a combination of OFDM and DSSS communications, or other schemes. Implementations of the 802.11ah protocol may be used for sensors, metering devices, and smart grid networks. Advantageously, aspects of certain devices implementing the 802.11ah protocol may consume less power than devices implementing other wireless protocols, and/or may be used to transmit wireless signals across a relatively long range, for example about one kilometer or longer.

In some implementations, a WLAN includes various devices that access the wireless network. For example, two types of devices are access points ("APs") and clients (also referred to as stations, or "STAs"). In general, an AP serves as a hub or base station for the WLAN and a STA serves as a user of the WLAN. For example, a STA may be a laptop computer, a personal digital assistant (PDA), a mobile phone, etc. In an example, a STA connects to an AP via a WiFi (e.g., IEEE 802.11 protocol) compliant wireless link to obtain general connectivity to the Internet or to other wide area networks. In some implementations, a STA may also be used as an AP.

An access point ("AP") may also include, be implemented as, or known as a NodeB, Radio Network Controller ("RNC"), eNodeB, Base Station Controller ("BSC"), Base Transceiver Station ("BTS"), Base Station ("BS"), Transceiver Function ("TF"), Radio Router, Radio Transceiver, or some other terminology.

A station "STA" may also include, be implemented as, or known as an access terminal ("AT"), a subscriber station, a subscriber unit, a mobile station, a remote station, a remote terminal, a user terminal, a user agent, a user device, user equipment, or some other terminology. In some implementations an access terminal may include a cellular telephone, a cordless telephone, a Session Initiation Protocol ("SIP") phone, a wireless local loop ("WLL") station, a personal digital assistant ("PDA"), a handheld device having wireless connection capability, or some other suitable processing device connected to a wireless modem. Accordingly, one or more aspects taught herein may be incorporated into a phone (e.g., a cellular phone or smartphone), a computer (e.g., a laptop), a portable communication device, a headset, a portable computing device (e.g., a personal data assistant), an entertainment device (e.g., a music or video device, or a satellite radio), a gaming device or system, a global positioning system device, or any other suitable device that is configured to communicate via a wireless medium. APs and stations may be referred to generally as transmitting or receiving nodes in a wireless communication network.

As described above, certain of the devices described herein may implement one or more of the 802.11 family of standards, including existing standards such as 802.11g and developing standards such as 802.1 lah. Such devices, whether used as a STA or AP or other device, may be used for smart metering or in a smart grid network. Such devices may provide sensor applications or be used in home automation. The devices may instead or in addition be used in a healthcare context, for example for personal healthcare. They may also be used for surveillance, to enable extended-range Internet connectivity (e.g. for use with hotspots), or to implement machine-to-machine communications.

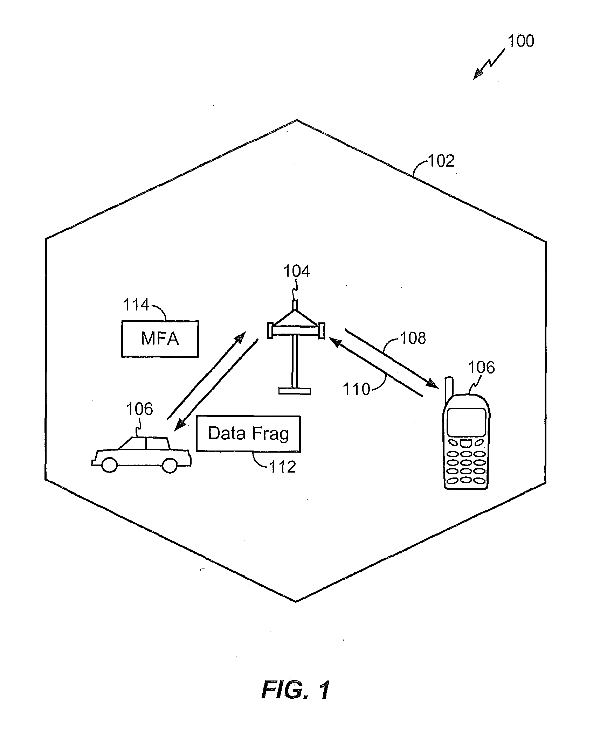

FIG. 1 illustrates an example of a wireless communication system 100 in which aspects of the present disclosure may be employed. The wireless communication system 100 may operate pursuant to a wireless standard, for example the 802.11ah standard. The wireless communication system 100 may include an AP 104 which communicates with STAs 106.

A variety of processes and methods may be used for transmissions in the wireless communication system 100 between the AP 104 and the STAs 106. For example, signals may be sent and received between the AP 104 and the STAs 106 in accordance with orthogonal frequency-division multiplexing (OFDM) or orthogonal frequency-division multiple access (OFDMA) techniques. If this is the case, the wireless communication system 100 may be referred to as an OFDM/OFDMA system. Alternatively, signals may be sent and received between the AP 104 and the STAs 106 in accordance with code division multiple access (CDMA) techniques. If this is the case, the wireless communication system 100 may be referred to as a CDMA system.

A communication link that facilitates transmission from the AP 104 to one or more of the STAs 106 may be referred to as a downlink (DL) 108, and a communication link that facilitates transmission from one or more of the STAs 106 to the AP 104 may be referred to as an uplink (UL) 110. Alternatively, a downlink 108 may be referred to as a forward link or a forward channel, and an uplink 110 may be referred to as a reverse link or a reverse channel.

As used herein, a "data unit" may be a MAC service data unit (MSDU). A "data frame" (alternatively referred to as a fragment or data fragment) may be a MAC protocol data unit (MPDU) that includes a portion or all of the MSDU. Thus, a single data unit may be partitioned into one or more data frames or fragments and the one or more data frames or fragments may collectively represent the single data unit.

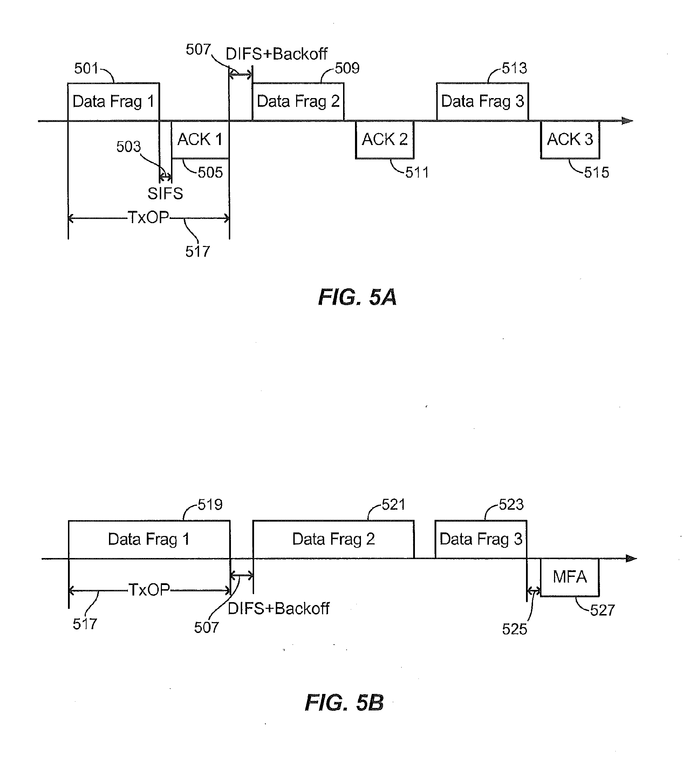

The AP 104 may transmit fragments (e.g., data fragment 112) of a single data unit to one or more of the STAs 106 and receive a multi-frame acknowledgement (e.g., MFA 114) from the one or more of the STAs 106, as described with reference to FIGS. 5b, 6, and 7b-7c.

The AP 104 may act as a base station and provide wireless communication coverage in a basic service area (BSA) 102. The AP 104 along with the STAs 106 associated with the AP 104 and that use the AP 104 for communication may be referred to as a basic service set (BSS). It should be noted that the wireless communication system 100 may not have a central AP 104, but rather may function as a peer-to-peer or ad-hoc network between the STAs 106. Accordingly, the functions of the AP 104 described herein may alternatively be performed by one or more of the STAs 106.

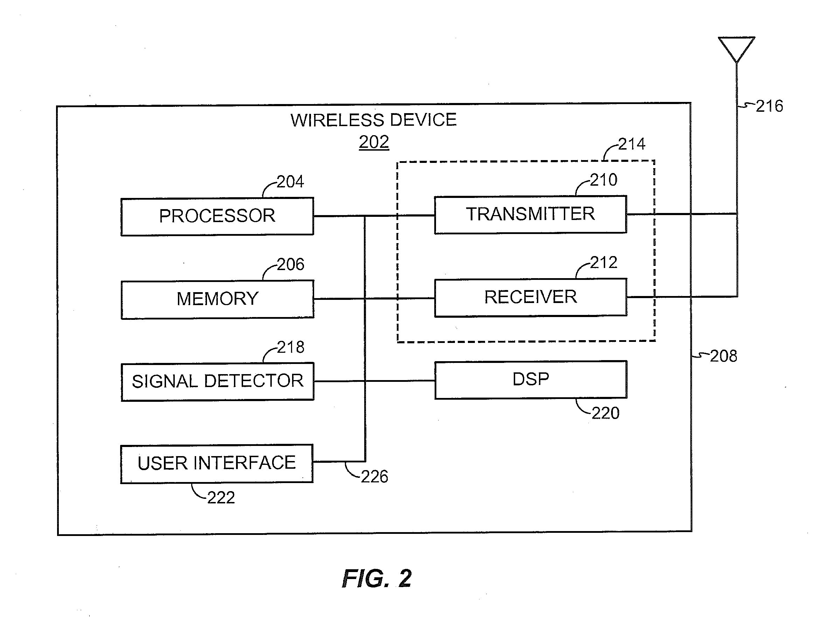

FIG. 2 illustrates various components that may be utilized in a wireless device 202 that may be employed within the wireless communication system 100. The wireless device 202 is an example of a device that may be configured to implement the various methods described herein. For example, the wireless device 202 may be the AP 104 or one of the STAs 106. The wireless device 202 may receive/transmit fragments (e.g., the data fragment 112 of FIG. 1) of a data unit and transmit/receive an MFA (e.g., the MFA 114 of FIG. 1), as described with reference to FIGS. 5b, 6, and 7b-7c.

The wireless device 202 may include a processor 204 which controls operation of the wireless device 202. The processor 204 may also be referred to as a central processing unit (CPU). Memory 206, which may include both read-only memory (ROM) and random access memory (RAM), provides instructions and data to the processor 204. A portion of the memory 206 may also include non-volatile random access memory (NVRAM). The processor 204 typically performs logical and arithmetic operations based on program instructions stored within the memory 206. The instructions in the memory 206 may be executable to implement the methods described herein.

The processor 204 may include or be a component of a processing system implemented with one or more processors. The one or more processors may be implemented with any combination of general-purpose microprocessors, microcontrollers, digital signal processors (DSPs), field programmable gate array (FPGAs), programmable logic devices (PLDs), controllers, state machines, gated logic, discrete hardware components, dedicated hardware finite state machines, or any other suitable entities that can perform calculations or other manipulations of information.

The processing system may also include machine-readable media for storing software. Software shall be construed broadly to mean any type of instructions, whether referred to as software, firmware, middleware, microcode, hardware description language, or otherwise. Instructions may include code (e.g., in source code format, binary code format, executable code format, or any other suitable format of code). The instructions, when executed by the one or more processors, cause the processing system to perform the various functions described herein.

The wireless device 202 may also include a housing 208 that may include a transmitter 210 and a receiver 212 to enable transmission and reception of data between the wireless device 202 and a remote device. The transmitter 210 and receiver 212 may be combined into a transceiver 214. An antenna 216 may be attached to the housing 208 and electrically coupled to the transceiver 214. The wireless device 202 may also include (not shown) multiple transmitters, multiple receivers, multiple transceivers, and/or multiple antennas.

The wireless device 202 may also include a signal detector 218 that may be used in an effort to detect and quantify the level of signals received by the transceiver 214. The signal detector 218 may detect such signals as total energy, energy per subcarrier per symbol, power spectral density and other signals. The wireless device 202 may also include a digital signal processor (DSP) 220 for use in processing signals. The DSP 220 may be configured to generate a data frame for transmission. In some aspects, the data frame may include a physical layer data unit (PPDU). In some aspects, the PPDU is referred to as a packet.

The wireless device 202 may further include a user interface 222 in some aspects. The user interface 222 may include a keypad, a microphone, a speaker, and/or a display. The user interface 222 may include any element or component that conveys information to a user of the wireless device 202 and/or receives input from the user.

The various components of the wireless device 202 may be coupled together by a bus system 226. The bus system 226 may include a data bus, for example, as well as a power bus, a control signal bus, and a status signal bus in addition to the data bus. Those of skill in the art will appreciate the components of the wireless device 202 may be coupled together or accept or provide inputs to each other using some other mechanism.

Although a number of separate components are illustrated in FIG. 2, those of skill in the art will recognize that one or more of the components may be combined or commonly implemented. For example, the processor 204 may be used to implement not only the functionality described above with respect to the processor 204, but also to implement the functionality described above with respect to the signal detector 218 and/or the DSP 220. Further, each of the components illustrated in FIG. 2 may be implemented using a plurality of separate elements.

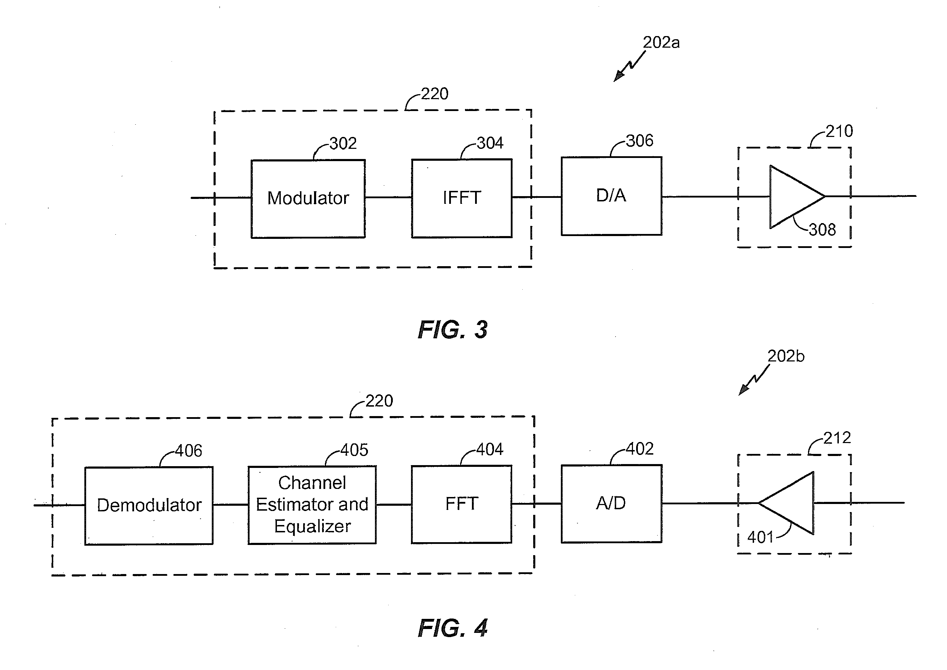

As described above, the wireless device 202 may include an AP 104 or a STA 106, and may be used to transmit and/or receive communications. FIG. 3 illustrates various components that may be utilized in the wireless device 202 to transmit wireless communications. The components illustrated in FIG. 3 may be used, for example, to transmit OFDM communications. For ease of reference, the wireless device 202 configured with the components illustrated in FIG. 3 is hereinafter referred to as a wireless device 202a.

The wireless device 202a may include a modulator 302 configured to modulate bits for transmission. For example, the modulator 302 may determine a plurality of symbols from bits received from the processor 204 or the user interface 222, for example by mapping bits to a plurality of symbols according to a constellation. The bits may correspond to user data or to control information. In some aspects, the bits are received in codewords. In one aspect, the modulator 302 includes a QAM (quadrature amplitude modulation) modulator, for example a 16-QAM modulator or a 64-QAM modulator. In other aspects, the modulator 302 includes a binary phase-shift keying (BPSK) modulator or a quadrature phase-shift keying (QPSK) modulator.

The wireless device 202a may further include a transform module 304 configured to convert symbols or otherwise modulated bits from the modulator 302 into a time domain. In FIG. 3, the transform module 304 is illustrated as being implemented by an inverse fast Fourier transform (IFFT) module.

In FIG. 3, the modulator 302 and the transform module 304 are illustrated as being implemented in the DSP 220. In some aspects, however, one or both of the modulator 302 and the transform module 304 are implemented in the processor 204 or in another element of the wireless device 202.

The DSP 220 may be configured to generate a data frame for transmission. For example, the DSP 220 may be configured to generate fragments (e.g., the data fragment 112 of FIG. 1) of a data unit and/or to generate an MFA (e.g., the MFA 114 of FIG. 1), as described with further reference to FIGS. 5b, 6, and 7b-7c. In some aspects, the modulator 302 and the transform module 304 may be configured to generate a data frame including a plurality of fields including control information and a plurality of data symbols. The fields including the control information may include one or more training fields, for example, and one or more signal (SIG) fields. Each of the training fields may include a known sequence of bits or symbols. Each of the SIG fields may include information about the data frame, for example a description of a length or data rate of the data frame.

In some aspects, the DSP 220 is configured to insert one or more training fields between a plurality of data symbols. The DSP 220 may determine a position or location of the one or more training fields in the data frame based on information received from the processor 204, and/or stored in the memory 206 or in a portion of the DSP 220.

The wireless device 202a may further include a digital to analog converter 306 configured to convert the output of the transform module 304 into an analog signal. For example, the time-domain output of the transform module 306 may be converted to a baseband OFDM signal by the digital to analog converter 306. The digital to analog converter 306 may be implemented in the processor 204 or in another element of the wireless device 202. In some aspects, the digital to analog converter 306 is implemented in the transceiver 214 or in a data transmit processor.

The analog signal may be wirelessly transmitted by the transmitter 210. The analog signal may be further processed before being transmitted by the transmitter 210, for example by being filtered or by being upconverted to an intermediate or carrier frequency. In the aspect illustrated in FIG. 3, the transmitter 210 includes a transmit amplifier 308. Prior to being transmitted, the analog signal may be amplified by the transmit amplifier 308. In some aspects, the amplifier 308 may be a low noise amplifier (LNA).

The transmitter 210 is configured to transmit one or more packets or data frames via a wireless signal based on the analog signal. The data frames may be generated using the processor 204 and/or the DSP 220, for example using the modulator 302 and the transform module 304.

In some aspects, the transmitter 210 is configured to transmit the data frames over a bandwidth of approximately 2.5 MHz or 1.25 MHz, or lower. When using such bandwidths, transmission of the data frame may be performed over a relatively lengthy period of time. For example, a data frame composed of 500 bytes may be transmitted over a period of approximately 11 milliseconds. Such transmission is approximately sixteen times slower than comparable transmissions implemented pursuant to the 802.11ac standard over bandwidths of approximately 20 MHz.

FIG. 4 illustrates various components that may be utilized in the wireless device 202 to receive wireless communications. The components illustrated in FIG. 4 may be used, for example, to receive OFDM communications. For example, the components illustrated in FIG. 4 may be used to receive data frames transmitted by the components described above with respect to FIG. 3 such as fragments (e.g., the data fragment 112 of FIG. 1) of a data frame and/or an MFA (e.g., the MFA 114 of FIG. 1). For ease of reference, the wireless device 202 configured with the components illustrated in FIG. 4 is hereinafter referred to as a wireless device 202b.

The receiver 212 is configured to receive one or more packets or data frames via a wireless signal. Data frames that may be received and decoded or otherwise processed are described in additional detail with respect to FIGS. 5-10.

In some aspects, the receiver 212 is configured to receive the data frames using a bandwidth of approximately 2.5 MHz or 1.25 MHz, or lower. When using such bandwidths, the data frame may be received over a relatively lengthy period of time, for example approximately 11 milliseconds when the data frame is composed of 500 bytes. During this time, the channel over which the data frame is received may be changing. For example, conditions of the channel may change due to movement of the wireless device 202b or of a device transmitting the data frame, or due to weather or other environmental conditions such as the introduction of various obstacles. In such circumstances, information received near the end may not be correctly decoded if the wireless device 202b uses settings determined when reception of the data frame began. As described in additional detail below, however, the wireless device 202b may use the training fields interposed between the plurality of data symbols to form an updated estimate of the channel in order to properly decode one or more of the data symbols.

In the aspect illustrated in FIG. 4, the receiver 212 includes a receive amplifier 401. The receive amplifier 401 may be configured to amplify the wireless signal received by the receiver 212. In some aspects, the receiver 212 is configured to adjust the gain of the receive amplifier 401 using an automatic gain control (AGC) procedure. In some aspects, the automatic gain control uses information in one or more received training fields, such as a received short training field (STF) for example, to adjust the gain. In some aspects, the amplifier 401 may be an LNA.

The wireless device 202b may include an analog to digital converter 402 configured to convert the amplified wireless signal from the receiver 212 into a digital representation thereof. Further to being amplified, the wireless signal may be processed before being converted by the digital to analog converter 402, for example by being filtered or by being downconverted to an intermediate or baseband frequency. The analog to digital converter 402 may be implemented in the processor 204 or in another element of the wireless device 202. In some aspects, the analog to digital converter 402 is implemented in the transceiver 214 or in a data receive processor.

The wireless device 202b may further include a transform module 404 configured to convert the representation the wireless signal into a frequency spectrum. In FIG. 4, the transform module 404 is illustrated as being implemented by a fast Fourier transform (FFT) module. In some aspects, the transform module may identify a symbol for each point that it uses.

The wireless device 202b may further include a channel estimator and equalizer 405 configured to form an estimate of the channel over which the data frame is received, and to remove certain effects of the channel based on the channel estimate. For example, the channel estimator may be configured to approximate a function of the channel, and the channel equalizer may be configured to apply an inverse of that function to the data in the frequency spectrum.

In some aspects, the channel estimator and equalizer 405 uses information in one or more received training fields, such as a long training field (LTF) for example, to estimate the channel. The channel estimate may be formed based on one or more LTFs received at the beginning of the data frame. This channel estimate may thereafter be used to equalize data symbols that follow the one or more LTFs. After a certain period of time or after a certain number of data symbols, one or more additional LTFs may be received in the data frame. The channel estimate may be updated or a new estimate formed using the additional LTFs. This new or update channel estimate may be used to equalize data symbols that follow the additional LTFs. In some aspects, the new or updated channel estimate is used to re-equalize data symbols preceding the additional LTFs. Those having ordinary skill in the art will understand methods for forming a channel estimate.

The wireless device 202b may further include a demodulator 406 configured to demodulate the equalized data. For example, the demodulator 406 may determine a plurality of bits from symbols output by the transform module 404 and the channel estimator and equalizer 405, for example by reversing a mapping of bits to a symbol in a constellation. The bits may be processed or evaluated by the processor 204, or used to display or otherwise output information to the user interface 222. In this way, data and/or information may be decoded. In some aspects, the bits correspond to codewords. In one aspect, the demodulator 406 includes a QAM (quadrature amplitude modulation) demodulator, for example a 16-QAM demodulator or a 64-QAM demodulator. In other aspects, the demodulator 406 may be a binary phase-shift keying (BPSK) demodulator or a quadrature phase-shift keying (QPSK) demodulator.

In FIG. 4, the transform module 404, the channel estimator and equalizer 405, and the demodulator 406 are illustrated as being implemented in the DSP 220. In some aspects, however, one or more of the transform module 404, the channel estimator and equalizer 405, and the demodulator 406 are implemented in the processor 204 or in another element of the wireless device 202.

The wireless signal received at the receiver 212 includes one or more data frames. Using the functions or components described above, the data frames or data symbols therein may be decoded evaluated or otherwise evaluated or processed. For example, the processor 204 and/or the DSP 220 may be used to decode data symbols in the data frames using the transform module 404, the channel estimator and equalizer 405, and the demodulator 406.

Data frames exchanged by the AP 104 and the STA 106 may include control information or data, as described above. At the physical (PHY) layer, these data frames may be referred to as physical layer protocol data units (PPDUs). In some aspects, a PPDU may be referred to as a packet or physical layer packet. Each PPDU may include a preamble and a payload. The preamble may include training fields and a SIG field. The payload may include a Media Access Control (MAC) header or data for other layers, and/or user data, for example. The payload may be transmitted using one or more data symbols. The systems, methods, and devices herein may utilize data frames with training fields that are also interposed between data symbols in the payload.

FIG. 5a illustrates a method for data fragmentation in a low-speed network. In FIG. 5a, a wireless device (not shown) prepares a data unit to be sent on a network. Because the network transmission speed is limited, the wireless device breaks the data unit into three data fragments: 501, 509 and 513. Each data fragment may be a packet or data frame with header data as well as content data. Collectively the fragments represent the single data unit. Starting from the left, data fragment 501 is first transmitted. After data fragment 501 is transmitted, the receiver waits a period of time 503 before transmitting an acknowledgement (assuming the data fragment is received). This period of time is referred to as the Short Interframe Space (SIFS).

Generally, SIFS is a short time interval between a data frame and its acknowledgment. SIFS are used in, for example, 802.11 compliant networks. The value of the SIFS (usually measured in microseconds) may be fixed per physical layer (PHY) and may be calculated so that a transmitting node will be able to switch back to receive mode and be capable of decoding an incoming packet. For example, a SIFS may be set at 10 µs.

After SIFS 503, ACK 505 is received by the wireless device. The ACK acknowledges that the receiver received data fragment 501. Notably, the time spent transmitting data fragment 501 plus SIFS 503 and the time receiving ACK 505 takes up the entire transmit opportunity window (TXOP) 517. The TXOP may be set by a standard, such as 802.11, and may be measured in, for example, milliseconds. For example, a TXOP for a particular network may be 10 ms. Thus, the total amount of data that can be sent with a data fragment is limited by the need to include SIFS 503 and ACK 505 into the single TXOP window 517.

After ACK 505 is received, the wireless device waits a period of time defined by the Distributed Coordination Function Interframe Space (DIFS) plus a randomized backoff period. The Distributed Coordination Function (DCF) requires a node participating in a Carrier Sense Multiple Access (CSMA) network to first sense the medium and if the medium is busy then to defer from transmitting for a period of time. The period of deferral (the DIFS) is followed by a randomized backoff period i.e. an additional period of time in which the node wishing to transmit will not attempt to access the medium.

The backoff period is used to resolve contention between different nodes (e.g. wireless devices) trying to access a medium (e.g. a radio network) at the same time. The backoff period may also be referred to as a contention window. Backoff requires each node trying to access a medium to choose a random number in a range and wait for the chosen number of time slots before trying to access the medium, and to check whether a different node has accessed the medium before. The slot time is defined in such a way that a node will always be capable of determining if another node has accessed the medium at the beginning of the previous slot. In particular, the 802.11 standard uses an exponential backoff algorithm where each time a node chooses a slot and collides with another node, it will increase the maximum number of the range exponentially. If, on the other hand, a node wishing to transmit senses the medium as free for the entire DIFS period, then the node may transmit on the medium. In some networks, the DIFS may be calculated, for example, as the SIFS plus a certain number of additional time slots.

After the DIFS plus backoff period 507, the wireless device transmits data fragment 509 and then receives ACK 511 after a SIFS period (not shown). Finally, after another DIFS and random backoff period (not shown), the wireless device transmits data fragment 513 and then receives ACK 515 after a SIFS period (not shown). At this point, the entire data unit has been sent. Notably, during the three TXOPs it took to send the single data unit, there were three SIFS periods, two DIFS periods plus random backoffs and three ACKs, and during all of these periods, the wireless device was not able to transmit content data (i.e. non-overhead data).

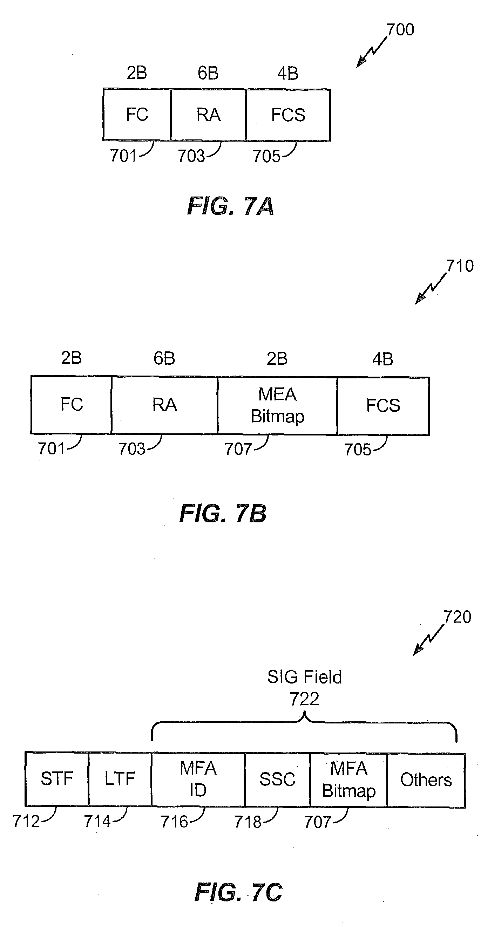

FIG. 5b illustrates aspects of a fragmentation method using a multi-frame acknowledgment (MFA). In one aspect, the method of FIG. 5b substitutes individual ACKs after each fragment is transmitted for an MFA, which acknowledges multiple fragments at once after the transmission of two or more successive fragments. Notably, the length of TXOP 517 and DIFS plus backoff 507 is the same as that of FIG. 5a. However, as can be seen, starting from left, the wireless device (not shown) is able to transmit data fragments 519, 521 and 523 without intervening ACKs or SIFS periods. As a result, the length of data fragments 519, 521 and 523 are longer (i.e. they carry more data) as compared to data fragments 501, 509 and 513 of FIG. 5a, respectively. Thus, in the implementation of FIG. 5b, fewer fragments may be needed to transmit the same amount of data because the data fragments include more data per fragment. This increases the efficiency of the medium use. Additionally, the overhead (e.g. SIFS, DIFS and ACKs) is reduced using this method. As can be seen in FIG. 5b, two SIFS periods and two ACKs are eliminated as compared to FIG. 5 a. This reduction in overhead may shorten the total duration of the medium use, which may correspondingly increase the efficiency of the medium use because it is dedicated for fewer time slots to a wireless device for a given amount of data. MFA 527 follows the transmission of data fragment 523 and SIFS period 525. MFA 527 acknowledges the receipt of fragments 519, 521 and 523, thus eliminating the need for individual fragment ACKs. An implementation of MFA 527 is described in more detail with reference to FIG. 7b, below.

In the implementation of FIG. 5b, multiple data fragments are sent sequentially without intervening ACKs. Accordingly, the data fragments may be modified so that a receiver may determine which fragments have been received and request any missing or corrupt data. In one aspect, the sequence control field of the MAC header for each data fragment may be modified such that, for example, four bits of the existing Frame Sequence Number (FSN) field are allocated to a Fragment Sequence Number (FGSN) and the remaining twelve bits are retained for the FSN. With four bits allocated to the FGSN, up to sixteen different fragments may be identified (i.e., fragment 0 to fragment 15). It is possible to identify more fragments by, for example, increasing the number of bits allocated to the FGSN in the sequence control field (at the expense of the FSN) or by adding additional bits to each fragment header (at the expense of overhead). For example, six bits may be allocated to the FGSN, which would enable a receiver to uniquely identify up to sixty-four different fragments. Generally, where *n* is the number of bits dedicated to the FGSN, 2*ⁿ* unique fragments may be identified.

A receiver may determine that the last fragment of a data unit has been sent (e.g. fragment 523 of FIG. 5b) by setting a "More Fragment" bit in the Frame Control (FC) field to indicate that there are or are not more fragments. For example, the "More Fragment" bit may be set to '0' to indicate no more fragments or '1' to indicate more fragments, or vice versa.

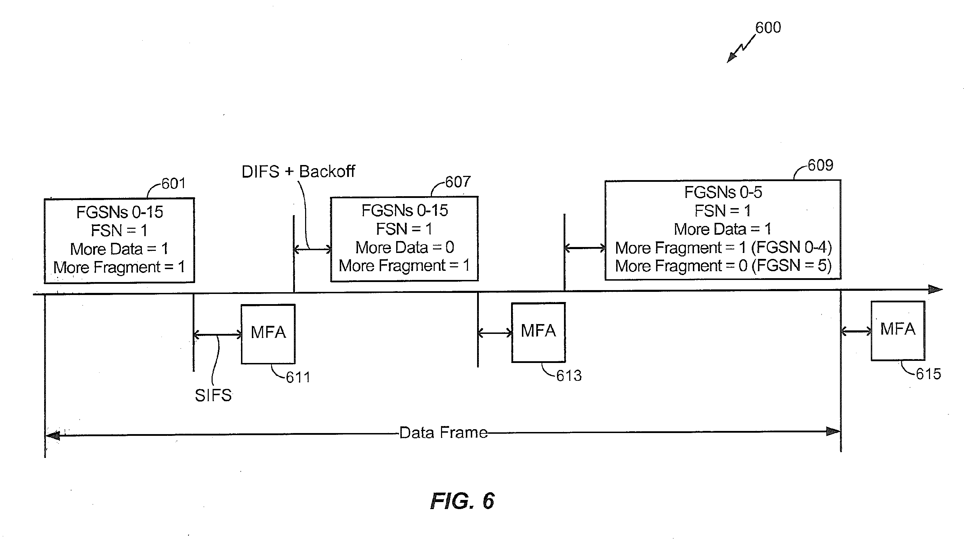

FIG. 6 illustrates aspects of a method 600 for distinguishing successive blocks of fragments using MFAs. It may be the case that a data unit requires more data fragments than can be uniquely identified by the FGSN. For example, a data frame may need to be split into thirty-eight fragments (i.e., fragment 0 to fragment 37), but the FGSN may only be able to distinguish sixteen unique fragments (i.e., fragment 0 to fragment 15), as described in the example above. The FGSN may be calculated for a group of fragments representing a single data unit using the modulus function so that the FGSN does not exceed the maximum FGSN as dictated by the number of bits dedicated to the FGSN. That is, for fragments beyond the maximum number of fragments uniquely identifiable by the FGSN (e.g. fragments 16-37 in this example), the modulus function will map the FGSN to a number within the range available given the number of bits dedicated to the FGSN. For example, the FGSN of the first fragment (i.e., fragment 0) in the sequence of thirty-eight will be set to mod(0,16) = 0. Likewise, the seventeenth fragment (i.e., fragment 16) in the sequence of thirty-eight will be set to mod(16,16) = 0. Thus, as shown in FIG. 6, the thirty-eight fragments will be transmitted in three blocks by a wireless device in order to transmit the entire data unit. The first two blocks of fragments (601 and 607) will each include sixteen fragments with FGSNs 0-15. The last block of fragments (609) will include six fragments with FGSNS 0-5. Each of the first thirty-seven fragments (i.e., fragment 0 to fragment 36) of the data unit will have the "More Fragment" bit set to 1. The last fragment (i.e., fragment 37) of the data unit will have the "More Fragment" bit set to 0. As described further in reference to FIG. 7c, fragments 15 and 31 will trigger a MFA as the last fragments of blocks 601 and 607 respectively. Fragment 37 will trigger a MFA as the last fragment of the data unit. Successive blocks of fragments (e.g. 601, 607 and 609) that belong to the same data unit share the same FSN (as shown FSN = 1 for each block). However, as described above, the FGSNs (e.g. 0-15) for each fragment are shared between blocks where the number of bits available for the FGSN does not permit each fragment in the data frame to be uniquely identified. If there are no errors in the transmission of each block of data fragments (e.g. blocks 610, 607 and 609), then there may be no need to distinguish between successive blocks since each MFA (611, 613 and 615, respectively) would confirm that all data fragments were received successfully. However, if there is an error during transmission of one or more data fragments, then it becomes necessary to distinguish between successive blocks because the receiver must, for example, identify which block any retransmitted fragments belong to (e.g. blocks 601, 607 or 609). Because the FGSN is reused in each successive block (e.g. the first fragment of block 601 has FGSN = 0 as well as the first fragment of block 607), the FGSN alone cannot be used for this purpose. This is because the receiver cannot, without more, tell the difference between two data fragments with identical FGSNs.

To distinguish successive blocks of fragments where the FGSN is repeated between successive blocks, an indication of order of the successive blocks of fragments (e.g. an indication of sequence order) may be added to the fragment headers. For example, an additional bit may be added to the fragment header to distinguish successive fragment blocks as "odd" or "even" blocks. Alternatively, a bit in the existing fragment header may be repurposed. For example, a bit in the "Power Management" or "More Data" field may be used (e.g., repurposed) to indicate each successive fragment as either an "odd" or "even" fragment. As shown in FIG. 6, the "More Data" field of each fragment in block 601 is set as '1', the "More Data" field of each fragment in block 607 is set as '0' and the "More Data" field of each fragment in block 609 is set as '1'. It does not matter whether '1' refers to "odd" or "even" or otherwise, so long as the bit can be set to distinguish between successive blocks. In this way, if MFA 611 indicates that a fragment in block 601 was not received successfully, then the missing or corrupted fragment can be resent as part of block 607 because the resent fragment will have an indication (e.g. the "More Data" field being set to '1') that it is from a previous block 601 and not a part of the current block 607. That is, the receiver will be able to distinguish the retransmitted data fragment from the newly transmitted data fragments so that the data unit can be rebuilt successfully. By repurposing a field in the existing header, no new overhead is added by using this method.

Notably, in the example illustrated in FIG. 6, it is not necessary to use more than a single bit as an indication of order of fragment blocks since a device will not begin transmission of a third block of fragments (e.g. 609) before the first block (e.g. 601) has been successfully received in its entirety where the MFA bitmap identifies the same number of fragments as there are unique FGSNs (e.g. 16 here).

FIG. 7a illustrates a fragment ACK 700, as may be used by the method in FIG. 5a. Fragment ACK 700 includes a frame control field (FC) 701, which is two bytes long, a receiver address (RA) 703 field which is six bytes long and a frame check sequence (FCS) field 705 that is four bytes long, totaling twelve bytes. By way of comparison, a 802.11 ACK, for example an 802.11n ACK, is fourteen bytes long. The fragment ACK 700 may be included in a MAC frame and may have a PHY preamble (not shown).

FIG. 7b illustrates aspects of a multi-fragment acknowledgement (MFA) 710, as may be used by the method in FIG. 5b. The MFA 710 may be a modified ACK that has the same FC 701, RA 703 and FCS 705 fields as the fragment ACK 700, but also includes MFA bitmap field 707. In the implementation of FIG. 7b, the MFA bitmap field 707 is two bytes (16 bits) long and can accordingly acknowledge up to sixteen different fragments. This may be a preferred implementation where each data fragment may have a FGSN that is four bits long, such that the FGSN can indicate sixteen different fragments. Each bit in the MFA bitmap field 707 may, for example, be set as a '1' if the corresponding fragment was received successfully or '0' if not received successfully, or vice versa. The MFA bitmap field 707 may be increased in length so that more fragments can be acknowledged with a single MFA. For example, the MFA bitmap field may instead by eight bytes long (64 bits) so that 64 unique fragments may be acknowledged. Generally, each bit dedicated to the MFA bitmap field 707 will be able to acknowledge a single fragment. Notably, increasing the MFA length does come at the expense of more overhead; however, the increased overhead may be offset in a robust network by the additional data fragments that can be sent consecutively. The MFA 710 may be included in a MAC frame and may have a PHY preamble (not shown).

Additional modifications to MFAs may be made by, for example, moving the RA field 703 into the FCS field 705. This would save six bytes of overhead, giving a total MFA length of eight bytes.

FIG. 7c illustrates aspects of another multi-fragment acknowledgement (MFA) 720, as may be used by the method in FIG. 5b. In contrast to the MFA 710 of FIG. 7b, the MFA 720 may be entirely included in a physical layer (PHY) preamble. As shown, the PHY preamble includes a STF 712, a LTF 714, and a SIG field 722. The SIG field 722 may include the same MFA bitmap field 707 as in MFA 710. In another embodiment, the MFA bitmap field 707 may be of a smaller size depending on the bit availability in the SIG field 722. The SIG field 722 may also include an MFA identifier (ID) field 716 that indicates a sequence number associated with the MFA 710. The SIG field 722 may include a starting sequence control (SSC) field 718 that indicates a sequence number of the data unit whose fragments are being acknowledged. The SIG field 722 may contain one or more additional fields, e.g., modulation and coding scheme (MCS), cyclic redundancy check (CRC), and tail. In particular implementations, the SIG field 722 may contain fewer of the described fields. In a particular embodiment, the MFA 720 does not include MAC layer data and may thus be smaller than the MFA 710.

In a particular embodiment, the MFA (e.g., the MFA 710, the MFA 720) may include an ACK mode indication bit (not shown) to distinguish the MFA from a conventional block acknowledgement (ACK) that acknowledges multiple data frames. For example, the MFA may include an ACK mode field. The ACK mode field may have a first value (e.g., 0) to indicate that the packet is an MFA and a second value (e.g., 1) to indicate that the packet is a block ACK. As another example, distinguishing between the MFA and a block ACK may be a two-step process. In the first step, the ACK mode field may distinguish between a "conventional" ACK (i.e., part of a session in which an ACK is to be received in response to each MPDU prior to transmission of the next MPDU) and a "block-type" ACK. The ACK mode field may have a first value (e.g., a first reserved MCS value) to indicate that the packet is an ACK and a second value (e.g., a second reserved MCS value) to indicate that the packet is a "block-type" ACK. A "block-type" ACK may be a block ACK (i.e., part of a session in which multiple MPDUs that include data from multiple data units will be acknowledged using a single block ACK) or a MFA (i.e., a MFA that acknowledges multiple fragments of a single data unit that were sent in multiple MPDUs).

In the second step, the MFA may be distinguished from a block ACK based on the data fragment to which the packet is a response to. If the data fragment indicates that the data fragment requires a block ACK as a response and a fragment number (e.g., FGSN) associated with the data fragment is greater than 0, then the packet is to be interpreted as a MFA. On the other hand, if the fragment number is 0 (or has no fragment number) then the packet is to be interpreted as a block ACK.

An MFA may be solicited (e.g., the receiver may be signaled to send an MFA) based on different conditions. For example, if the last fragment of a data unit is received, as described above with respect to FIG. 5b, the "More Fragment" bit in the frame control portion of the fragment header may be set to indicate it is the last fragment of the data unit and that an MFA should be sent. For example, as illustrated in block 609 of FIG. 6, the "More Fragment" bit of the last data fragment may be set to '0' to indicate an MFA should be sent. Alternatively, if the FGSN of a received fragment in a block of fragments (e.g. block 601 in FIG. 6) is set to the highest FGSN available (e.g., 15) that can be accommodated by a FGSN field of the last data fragment, it may indicate to the receiver that an MFA should be sent. For example, if a FGSN field of the last data fragment is 4 bits, a largest FGSN value that can be accommodated by the 4-bit field may be '1111' or 15. Because in this situation the FGSN may reset to a lowest FGSN value (e.g., after the highest value is reached) to indicate a beginning of a sequence of fragments in the next block, then an MFA should be sent so that a successive block of fragments may begin transmitting.

From the perspective of the wireless device transmitting data, if an MFA is not received during a time period after the last fragment of a block or a data unit is transmitted, the wireless device may, for example, retransmit the last fragment to re-solicit the receiver to send an MFA.

Upon receipt of an MFA indicating errors in the transmission of one or more fragments (e.g., the MFA bitmap indicated errors), the indicated fragments may be retransmitted by the wireless device. The receiver may acknowledge the receipt of the retransmitted fragments by, for example, responding with an ACK (rather than a MFA) for each retransmitted fragment, or may instead use an MFA to acknowledge multiple retransmitted fragments, or may use an MFA to acknowledge one or more retransmitted fragments as well as new fragments. As described above with reference to FIG. 6, fragments from successive blocks may be distinguished by using an indication of their send order (e.g. "odd" or "even"). Two successive blocks of fragments may be transmitted before an MFA is received that acknowledges receipt of the fragments of the first block in the case where the bitmap of the MFA has enough (e.g., 32) bits to acknowledge fragments associated with two blocks of fragments (e.g., 16 fragments in each block or 32 fragments in total). Once receipt of all the fragments of the data unit has been acknowledged (e.g., by one or more MFAs and/or by ACKs for retransmitted fragments), the wireless device may initiate transmission of a next data unit. Using MFAs instead of fragment ACKs may increase overall transmission efficiency. For instance, at a 150 Kbps (kilobits per second) transmission rate over a bandwidth of approximately 1 MHz with a 5 ms (millisecond) TXOP, the transmission efficiency increase may be approximately 18 percent. At a 16 Mbps (megabits per second) transmission rate over a bandwidth of approximated 2 MHz with 16 fragments, the transmission efficiency increase may be approximately 55 percent.

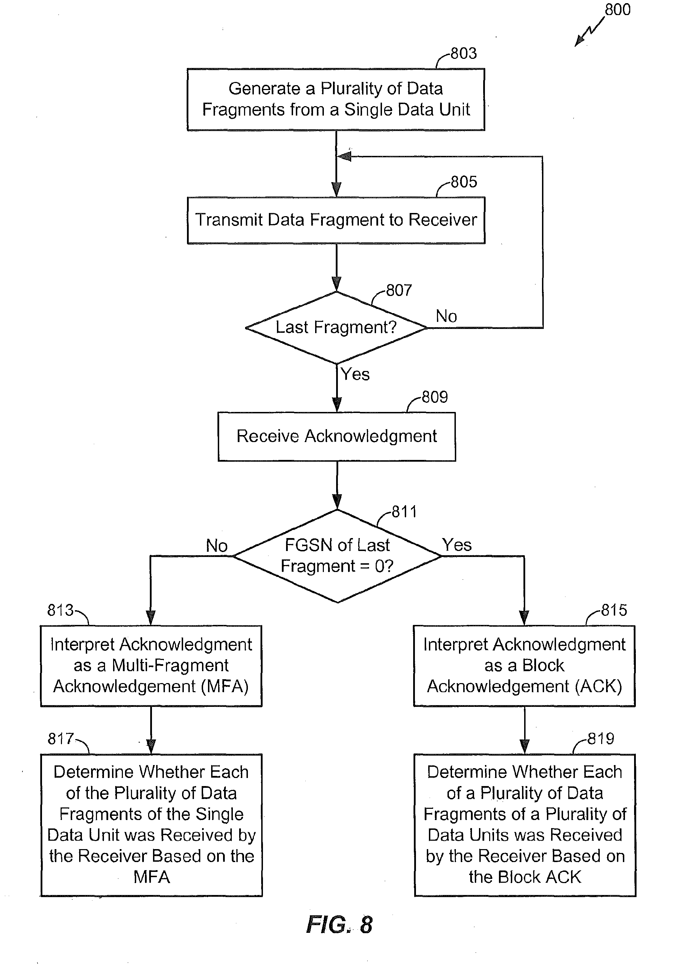

FIG. 8 illustrates aspects of a method of transmitting a plurality of data fragments and receiving a multi-fragment acknowledgement (MFA). The process flow 800 includes a step 803 where a device generates a plurality of data fragments from a single data unit. The process flow 800 then moves to step 805 where the device transmits a data fragment to a receiver. The process flow 800 then moves to step 807 where the device determines whether the last transmitted fragment was the last fragment of the data unit or of a block of data fragments of the data unit. As described above with reference to FIG. 5b, the device may set the "More Fragment" bit in the Frame Control (FC) field to indicate that there are or are not more fragments forthcoming. As described above with reference to FIG. 6, the device may set the FGSN to a maximum available FGSN to indicate the last data fragment of the block of data fragments.

If the fragment sent at step 805 is not the last fragment, then the process flow 800 returns to step 805 and sends the next fragment of the data unit. If, on the other hand, at step 807 the fragment sent at step 805 is the last fragment, then the process flow 800 moves to step 809. At step 809, the device receives an acknowledgement, and the process flow 800 moves to step 811. At step 811, the device determines whether a fragment sequence number (FGSN) of the last fragment of the data unit is equal to zero (or another value that indicates fragmentation is not in use). If the FGSN of the last data fragment is equal to zero, then the process flow 800 moves to step 815 and the device interprets the acknowledgement as a block ACK (e.g., an uncompressed block ACK with a 128-byte bitmap that indicates receipt/non-receipt for up to 16 fragments for each of up to 64 data units). The process flow 800 then moves to step 819. At step 819, the device determines whether each of a plurality of data fragments of a plurality of data units was received by the receiver based on the block ACK (e.g., whether each of up to 16 fragments for each of up to 64 data units was received).

If, on the other hand, at step 811 the FGSN of the last data fragment is not equal to zero, then the process flow 800 moves to step 813 and the device interprets the acknowledgement as a multi-fragment acknowledgment (MFA) that indicates the status of each transmitted fragment. As described above, with reference to FIG. 7b, the MFA includes a bitmap that indicates receipt or non-receipt of each transmitted fragment of the block of data fragments of the single data unit. The process flow 800 then moves to step 817. At step 817, the device determines whether each of the plurality of data fragments of the single data unit was received by the receiver based on the MFA. As described above, with reference to FIG. 7b, the bitmap included in the MFA may be used to determine whether each transmitted fragment of the block of data fragments of the single data unit was received.

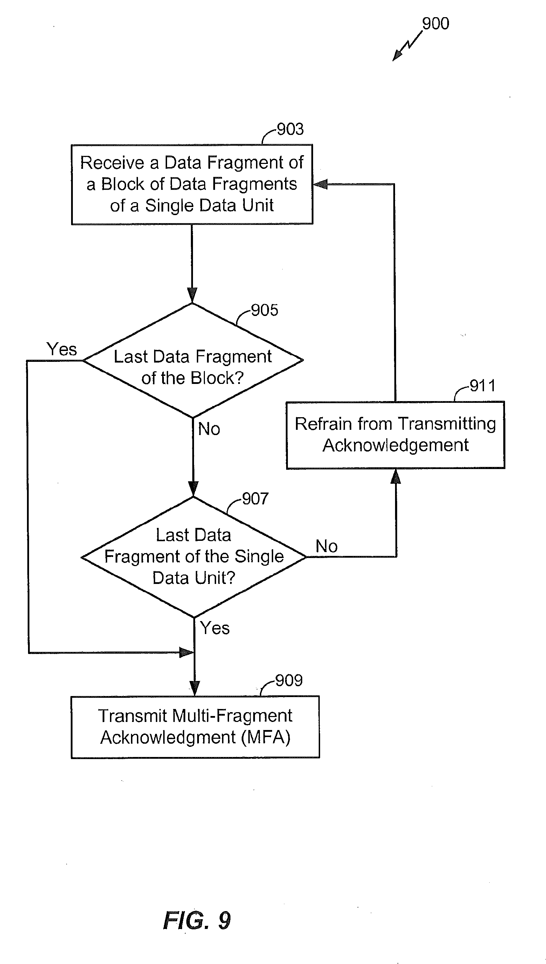

FIG. 9 illustrates aspects of a method of receiving a plurality of data fragments and transmitting a multi-fragment acknowledgement (MFA). The process flow 900 includes step 903 where a device receives a data fragment of a block of data fragments of a single data unit from a wireless device. The process flow 900 then moves to step 905 where the device determines whether the data fragment is a last data fragment of the block of data fragments of the single data unit. As described above with reference to FIG. 7c, the FGSN of the data fragment may have a highest available FGSN value indicating that the data fragment is the last data fragment of the block. If the data fragment is the last data fragment of the block, then the process flow 900 moves to step 909.

If, on the other hand, the device determines that the data fragment is not the last data fragment of the block, then the process flow 900 moves to step 907. At step 907, the device determines whether the data fragment is a last data fragment of the single data unit. As described above with reference to FIG. 5b, a "More Fragment" bit of the data fragment may indicate whether the data fragment is the last data fragment of the single data unit. If the data fragment is not the last data fragment of the single data unit, the process flow 900 moves to step 911, and the device refrains from transmitting an acknowledgement to the wireless device. The process flow 900 then returns to step 903 and the device receives a next data fragment of the single data unit. If, on the other hand, the device determines at step 907 that the data fragment is the last data fragment of the single data unit then the process flow 900 moves to step 909. At step 909, the device transmits a multi-fragment acknowledgement (MFA) to the wireless device. As described above, with reference to FIG. 7b, the MFA includes a bitmap that indicates receipt or non-receipt of each transmitted fragment of the block of data fragments of the data unit.

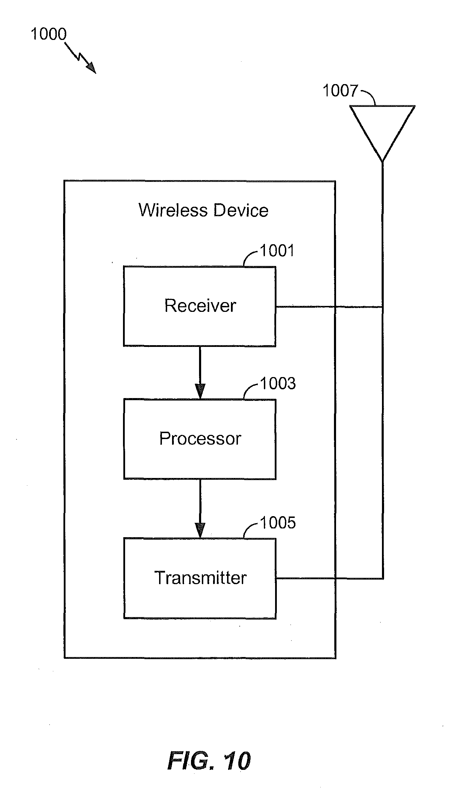

FIG. 10 is a block diagram of an example wireless device 1000 in accordance with certain aspects of the present disclosure. Those skilled in the art will appreciate that a wireless device may have more components than the simplified wireless device 1000 illustrated in FIG. 10. The wireless device 1000 includes only those components useful for describing some prominent features of implementations within the scope of the claims. Wireless device 1000 includes a receiver 1001, a processor 1003, a transmitter 1005 and an antenna 1005. In one implementation wireless device 1000 is configured to transmit data frames in a carrier sense multiple access network. In one implementation, means for creating a plurality of data fragments from a single data unit includes the processor 1003 (e.g., programmed to determine a size of the MSDU, determine a number of data fragments by dividing the size of the MSDU by a packet payload size, and generate the determined number of data fragments). In one implementation, means for initiating transmission of the plurality of data fragments to a wireless device includes the processor 1003 (e.g., programmed to determine that the plurality of data fragments are ready to be transmitted and send a signal to the transmitter 1005 requesting transmission of the plurality of data fragments). In one implementation, means for receiving an acknowledgement included in a SIG field of a PHY preamble of a packet from the wireless device indicating the receipt or non-receipt by the wireless device of each of the plurality of data fragments of the single data unit after a last data fragment of the plurality of data fragments is transmitted includes the processor 1003. In one implementation, means for receiving a data fragment of a block of data fragments of a single data unit includes the processor 1003 (e.g., programmed to receive the acknowledgement as a signal from the receiver 1001). In one implementation, means for initiating transmission of an acknowledgement indicating whether each of the data fragments of the block of data fragments of the single data unit was received from a wireless device to the wireless device in response to determining that the data fragment is a last data fragment of the block of data fragments of the single data unit includes the processor 1003 (e.g., programmed to determine a FGSN of the data fragment, compare the FGSN to a highest FGSN value, such as 15, that can be accommodated by a FGSN field of the last data fragment, and in response to the FGSN matching the highest FGSN value, send a signal to the transmitter 1005 requesting transmission of the acknowledgement). In one implementation, means for initiating transmission of the acknowledgement to the wireless device in response to determining that the data fragment is a last data fragment of the single data unit includes the processor 1003 (e.g., programmed to determine whether a 'More Fragment' bit of the data fragment matches '0' indicating that additional data fragments are not forthcoming, and in response to the 'More Fragment' bit matching '0', send a signal to the transmitter 1005 requesting transmission of the acknowledgement). In one implementation, means for refraining from initiating transmission of the acknowledgement to the wireless device in response to determining that the data fragment is not the last data fragment of the block of data fragments and that the data fragment is not the last data fragment of the single data unit includes the processor 1003 (e.g., programmed to determine the FGSN of the data fragment, compare the FGSN to the highest FGSN value, determine whether the 'More Fragment' bit of the data fragment matches '0', and in response to determining that the FGSN does not match the highest FGSN value and that the 'More Fragment' bit does not match '0', not send a signal to the transmitter 1005 requesting transmission of the acknowledgement).

One or more of the disclosed embodiments may be implemented in a system or an apparatus that may include a communications device, a fixed location data unit, a mobile location data unit, a mobile phone, a cellular phone, a computer, a tablet, a portable computer, or a desktop computer. Additionally, the system or the apparatus may include a set top box, an entertainment unit, a navigation device, a personal digital assistant (PDA), a monitor, a computer monitor, a television, a tuner, a radio, a satellite radio, a music player, a digital music player, a portable music player, a video player, a digital video player, a digital video disc (DVD) player, a portable digital video player, any other device that stores or retrieves data or computer instructions, or a combination thereof. As another illustrative, non-limiting example, the system or the apparatus may include remote units, such as mobile phones, hand-held personal communication systems (PCS) units, portable data units such as personal data assistants, global positioning system (GPS) enabled devices, navigation devices, fixed location data units such as meter reading equipment, or any other device that stores or retrieves data or computer instructions, or any combination thereof. Although one or more of FIGS. 1-10 may illustrate systems, apparatuses, and/or methods according to the teachings of the disclosure, the disclosure is not limited to these illustrated systems, apparatuses, and/or methods. Embodiments of the disclosure may be suitably employed in any device that includes integrated circuitry including memory, a processor, and on-chip circuitry.

It should be understood that any reference to an element herein using a designation such as "first," "second," and so forth does not generally limit the quantity or order of those elements. Rather, these designations may be used herein as a convenient method of distinguishing between two or more elements or instances of an element. Thus, a reference to first and second elements does not mean that only two elements may be employed or that the first element must precede the second element in some manner. Also, unless stated otherwise a set of elements may comprise one or more elements.

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like. Further, a "channel width" as used herein may encompass or may also be referred to as a bandwidth in certain aspects.

As used herein, a phrase referring to "at least one of" a list of items refers to any combination of those items, including single members. As an example, "at least one of: a, b, or c" is intended to cover: a, b, c, a-b, a-c, b-c, and a-b-c.

Various illustrative components, blocks, configurations, modules, circuits, and steps have been described above generally in terms of their functionality. Whether such functionality is implemented as hardware or processor executable instructions depends upon the particular application and design constraints imposed on the overall system. Additionally, the various operations of methods described above may be performed by any suitable means capable of performing the operations, such as various hardware and/or software component(s), circuits, and/or module(s). Generally, any operations illustrated in the FIGS. 1-10 may be performed by corresponding functional means capable of performing the operations. Skilled artisans may implement the described functionality in varying ways for each particular application, but such implementation decisions should not be interpreted as causing a departure from the scope of the present disclosure.

Those of skill in the art would further appreciate that the various illustrative logical blocks, configurations, modules, circuits, and algorithm steps described in connection with the present disclosure may be implemented or performed with a general purpose processor, a digital signal processor (DSP), an application specific integrated circuit (ASIC), a field programmable gate array signal (FPGA) or other programmable logic device (PLD), discrete gate or transistor logic, discrete hardware components (e.g., electronic hardware), computer software executed by a processor, or any combination thereof designed to perform the functions described herein. A general purpose processor may be a microprocessor, but in the alternative, the processor may be any commercially available processor, controller, microcontroller or state machine. A processor may also be implemented as a combination of computing devices, e.g., a combination of a DSP and a microprocessor, a plurality of microprocessors, one or more microprocessors in conjunction with a DSP core, or any other such configuration.

In one or more aspects, the functions described may be implemented in hardware, software, firmware, or any combination thereof. If implemented in software, the functions may be stored as one or more instructions or code on a computer-readable medium. Computer-readable media includes computer-readable storage media and communication media including any medium that facilitates transfer of a computer program from one place to another. A storage media may be any available media that can be accessed by a computer. By way of example, and not limitation, such computer-readable storage media can include random access memory (RAM), read-only memory (ROM), programmable read-only memory (PROM), erasable PROM (EPROM), electrically erasable PROM (EEPROM), register(s), hard disk, a removable disk, a compact disc read-only memory (CD-ROM), other optical disk storage, magnetic disk storage, magnetic storage devices, or any other medium that can be used to store desired program code in the form of instructions or data structures and that can be accessed by a computer. In the alternative, the computer-readable media (e.g., a storage medium) may be integral to the processor. The processor and the storage medium may reside in an application-specific integrated circuit (ASIC). The ASIC may reside in a computing device or a user terminal. In the alternative, the processor and the storage medium may reside as discrete components in a computing device or user terminal.

Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and Blu-ray® disc (Blu-ray is a registered trademark of Sony Corp. of Tokyo, Japan) where disks usually reproduce data magnetically, while discs reproduce data optically with lasers. Thus, in some aspects computer readable medium may include a non-transitory computer readable medium (e.g., tangible media). In addition, in some aspects computer readable medium may include a transitory computer readable medium (e.g., a signal). Combinations of the above should also be included within the scope of computer-readable media.

The methods disclosed herein include one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

Thus, certain aspects may include a computer program product for performing the operations presented herein. For example, such a computer program product may include a computer-readable storage medium having instructions stored (and/or encoded) thereon, the instructions being executable by one or more processors to perform the operations described herein. For certain aspects, the computer program product may include packaging material.

Further, it should be appreciated that modules and/or other appropriate means for performing the methods and techniques described herein can be downloaded and/or otherwise obtained by a user terminal and/or base station as applicable. Alternatively, various methods described herein can be provided via storage means (e.g., RAM, ROM, a physical storage medium such as a compact disc (CD) or floppy disk, etc. Moreover, any other suitable technique for providing the methods and techniques described herein to a device can be utilized.

It is to be understood that the claims are not limited to the precise configuration and components illustrated above.
The previous description of the disclosed embodiments is provided to enable a person skilled in the art to make or use the disclosed embodiments. While the foregoing is directed to aspects of the present disclosure, other and further aspects of the disclosure may be devised without departing from the basic scope thereof, and the scope is determined by the claims that follow. Various modifications, changes and variations may be made in the arrangement, operation, and details of the embodiments described herein without departing from the scope of the disclosure or the claims. Thus, the present disclosure is not intended to be limited to the embodiments herein but is to be accorded the widest scope possible consistent with the principles and novel features as defined by the following claims and equivalents thereof.

### FURTHER SUMMARY OF THE INVENTION

1. A method comprising:
   creating a plurality of data fragments from a single data unit;
   transmitting the plurality of data fragments to a receiver;
   after transmitting a last data fragment of the plurality of data fragments, receiving an acknowledgement from the receiver; and
   selectively interpreting the acknowledgement as a multi-fragment acknowledgement (MFA) in response to a value of a fragment sequence number (FGSN) of the last data fragment, wherein the MFA indicates receipt or non-receipt by the receiver of each of the plurality of data fragments of the single data unit.
2. The method of 1, wherein the acknowledgement is interpreted as the MFA in response to determining that the value of the FGSN is non-zero.
3. The method of 1, further comprising selectively retransmitting one or more of the plurality of data fragments based on the MFA.
4. The method of 1, further comprising initiating transmission of a next data unit based on the MFA.
5. The method of 4, wherein a FGSN of a first data fragment of the next data unit has a lowest FGSN value that indicates a beginning of a sequence.
6. The method of 1, further comprising determining whether the acknowledgement is a block-type acknowledgement based on a field in the acknowledgement, wherein the field comprises a modulation and coding scheme (MCS) field.
7. The method of 6, wherein a particular reserved value of the MCS field indicates that the acknowledgement is the block-type acknowledgement.
8. The method of 1, wherein the MFA comprises a bitmap, wherein each bit of the bitmap indicates whether a corresponding data fragment of the plurality of data fragments was received by the receiver.
9. The method of 1, further comprising retransmitting the last data fragment to the receiver when the MFA is not received during a time period after transmitting the last data fragment.
10. The method of 1, further comprising generating a FGSN for each of the plurality of data fragments.
11. The method of 10, wherein the FGSN of each of the plurality of data fragments is generated using a modulus function.
12. The method of 1, further comprising:
   partitioning the plurality of data fragments into a plurality of fragment blocks; and
   generating an indication of fragment block sequence order associated with each fragment block of the plurality of fragment blocks,
   wherein each data fragment of the plurality of data fragments includes the indication associated with a corresponding fragment block.
13. The method of 12, wherein the indication associated with the corresponding fragment block is included in at least one of a more data field and a power management field of the data fragment.
14. The method of 1, wherein the MFA is included in a physical layer (PHY) preamble of a packet.
15. The method of 14, wherein the MFA is included in a signal (SIG) field of the PHY preamble.
16. The method of 1, wherein the MFA includes a frame check sequence field and a receiver address field, and wherein the receiver address field is included within the frame check sequence field.
17. A method comprising:
   receiving a data fragment of a block of data fragments of a single data unit;
   in response to determining that the data fragment is a last data fragment of the block of data fragments of the single data unit, transmitting an acknowledgement to a wireless device, wherein the acknowledgement indicates whether each of the data fragments of the block of data fragments of the single data unit was received from the wireless device;
   in response to determining that the data fragment is a last data fragment of the single data unit, transmitting the acknowledgement to the wireless device; and
   in response to determining that the data fragment is not the last data fragment of the block of data fragments of the single data unit and that the data fragment is not the last data fragment of the single data unit, refraining from transmitting the acknowledgement to the wireless device.
18. The method of 17, wherein the acknowledgment is a multi-fragment acknowledgement (MFA), wherein the MFA comprises a bitmap, wherein each bit of the bitmap indicates whether a corresponding data fragment of the plurality of data fragments was received.
19. A non-transitory computer-readable medium storing instructions that, when executed by a processor, cause the processor to:
   create a plurality of data fragments from a single data unit;
   initiate transmission of the plurality of data fragments to a receiver;
   receive an acknowledgement from the receiver after a last data fragment of the plurality of data fragments is transmitted; and
   selectively interpret the acknowledgement as a multi-fragment acknowledgement (MFA) in response to a value of a fragment sequence number (FGSN) of the last data fragment, wherein the MFA indicates receipt or non-receipt by the receiver of each of the plurality of data fragments of the single data unit.
20. The non-transitory computer-readable medium of 19, wherein the acknowledgement is interpreted as the MFA in response to determining that the value of the FGSN is non-zero.
21. A non-transitory computer-readable medium storing instructions that, when executed by a processor, cause the processor to:
   receive a data fragment of a block of data fragments of a single data unit;
   initiate transmission of an acknowledgement to a wireless device in response to determining that the data fragment is a last data fragment of the block of data fragments of the single data unit, the acknowledgement indicating whether each of the data fragments of the block of data fragments of the single data unit was received from the wireless device;
   initiate transmission of the acknowledgement to the wireless device in response to determining that the data fragment is a last data fragment of the single data unit; and
   refrain from initiating transmission of the acknowledgement to the wireless device in response to determining that the data fragment is not the last data fragment of the block of data fragments of the single data unit and that the data fragment is not the last data fragment of the single data unit.
22. The non-transitory computer-readable medium of 21, wherein the last data fragment of the single data unit has a particular value of a more fragment field.
23. The non-transitory computer-readable medium of 21, wherein a fragment sequence number (FGSN) of the last data fragment of the block of data fragments has a highest FGSN value that can be accommodated by a FGSN field of the last data fragment.
24. The non-transitory computer-readable medium of 21, wherein the acknowledgement is included in a signal (SIG) field of a physical layer (PHY) preamble of a packet.
25. An apparatus comprising:
   means for creating a plurality of data fragments from a single data unit;
   means for initiating transmission of the plurality of data fragments to a wireless device; and
   means for receiving an acknowledgment from the wireless device after a last data fragment of the plurality of data fragments is transmitted, the acknowledgement indicating receipt or non-receipt by the wireless device of each of the plurality of data fragments of the single data unit, wherein the acknowledgement is included in a signal (SIG) field of a physical layer (PRY) preamble of a packet.
26. The apparatus of 25, wherein the acknowledgment is a multi-fragment acknowledgement (MFA), wherein the MFA comprises a bitmap, wherein each bit of the bitmap indicates whether a corresponding data fragment of the plurality of data fragments was received by the wireless device.
27. An apparatus comprising:
   means for receiving a data fragment of a block of data fragments of a single data unit;
   means for initiating transmission of an acknowledgement to a wireless device in response to determining that the data fragment is a last data fragment of the block of data fragments of the single data unit, wherein the acknowledgement indicates whether each of the data fragments of the block of data fragments of the single data unit was received from the wireless device;
   means for initiating transmission of the acknowledgement to the wireless device in response to determining that the data fragment is a last data fragment of the single data unit; and
   means for refraining from initiating transmission of the acknowledgement to the wireless device in response to determining that the data fragment is not the last data fragment of the block of data fragments of the single data unit and that the data fragment is not the last data fragment of the single data unit.
28. The apparatus of 27, wherein the acknowledgement is included in a signal (SIG) field of a physical layer (PHY) preamble of a packet.
29. An apparatus comprising:
   a processor configured to:
      create a plurality of data fragments from a single data unit; and
      partition the plurality of data fragments into a plurality of fragment blocks, wherein at least one fragment block of the plurality of fragment blocks includes two or more data fragments;
      initiate transmission of a first fragment block of the plurality of fragment blocks to a device; and
      receive an acknowledgement from the device after a last data fragment of the first fragment block is transmitted, wherein the acknowledgement indicates receipt or non-receipt by the device of each of the data fragments of the first fragment block.
30. The apparatus of 29, further comprising:
   a transmitter configured to transmit the first fragment block of the plurality of fragment blocks to the device; and
   a receiver configured to receive the acknowledgement from the device.
31. The apparatus of 29, wherein the processor is further configured to initiate transmission of a second fragment block of the plurality of fragment blocks in response to determining, based on the acknowledgement, that each of the data fragments of the first fragment block was received by the device.
32. The apparatus of 29, wherein the processor is further configured to generate an indication of fragment block sequence order associated with each fragment block of the plurality of fragment blocks, wherein each data fragment of the plurality of data fragments includes the indication associated with a corresponding fragment block.
33. The apparatus of 29, wherein the processor is further configured to:
   initiate transmission of a third fragment block of the plurality of fragment blocks to the device before receiving the acknowledgement, wherein the acknowledgement further indicates receipt or non-receipt of each of the data fragments of the third fragment block.
34. An apparatus comprising:
   a processor configured to:
      receive a data fragment of a block of data fragments of a single data unit;
      initiate transmission of an acknowledgement to a wireless device in response to determining that the data fragment is a last data fragment of the block of data fragments of the single data unit, wherein the acknowledgement indicates whether each of the data fragments of the block of data fragments of the single data unit was received from the wireless device;
      initiate transmission of the acknowledgement to the wireless device in response to determining that the data fragment is a last data fragment of the single data unit; and
      refrain from initiating transmission of the acknowledgement to the wireless device in response to determining that the data fragment is not the last data fragment of the block of data fragments of the single data unit and that the data fragment is not the last data fragment of the single data unit.
35. The apparatus of 34, further comprising:
   a receiver configured to receive the data fragment of the block of data fragments of the single data unit; and
   a transmitter configured to transmit the acknowledgement to the wireless device.

## Claims

1. A method comprising:
receiving a data fragment of a block of data fragments of a single data unit from a wireless device at a receiver;
in response to determining that the data fragment is a last data fragment of the block of data fragments of the single data unit, transmitting an acknowledgement to the wireless device, wherein the acknowledgement indicates whether each data fragment of the block of data fragments of the single data unit was received from the wireless device; and
in response to determining that the data fragment is not the last data fragment of the block of data fragments of the single data unit refraining from transmitting the acknowledgement to the wireless device.

2. The method of claim 1, wherein the acknowledgement is a multi-fragment acknowledgement (MFA), wherein the MFA comprises a bitmap, and wherein each bit of the bitmap indicates whether a corresponding data fragment of the block of data fragments was received.

3. The method of claim 1, wherein the acknowledgement identifies data fragments of the block of data fragments that have been received with errors.

4. The method of claim 3, wherein the acknowledgement further identifies a particular data unit to which data fragments are assigned when data fragments from more than one data unit are received.

5. The method of claim 1, wherein the acknowledgement identifies data fragments that have not been received.

6. A non-transitory computer-readable medium storing instructions that, when executed by a processor, cause the processor to carry out the steps of any of claims 1 to 5.

7. An apparatus comprising:
means for receiving a data fragment of a block of data fragments of a single data unit from a wireless device;
means for initiating transmission of an acknowledgement to the wireless device in response to determining that the data fragment is a last data fragment of the block of data fragments of the single data unit, wherein the acknowledgement indicates whether each data fragment of the block of data fragments of the single data unit was received from the wireless device; and
wherein the means initiating transmission of the acknowledgement to the wireless device is configured to refrain from initiating transmission of the acknowledgement in response to determining that the data fragment is not the last data fragment of the block of data fragments of the single data unit.

8. The apparatus of claim 7, wherein the acknowledgement is included in a signal (SIG) field of a physical layer (PHY) preamble of a packet.

9. The apparatus of claim 7, wherein the acknowledgement is a multi-fragment acknowledgement (MFA), wherein the MFA comprises a bitmap, and wherein each bit of the bitmap indicates whether a corresponding data fragment of the block of data fragments was received.

10. The apparatus of claim 7, wherein the acknowledgement identifies data fragments of the block of data fragments that have been received with errors.

11. The apparatus of claim 7, wherein the acknowledgement further identifies a particular data unit to which data fragments belong when data fragments from more than one data unit are received.
